# EUROPÄISCHE PATENTSCHRIFT

(11) **EP 1 946 951 B1**
(45) Veröffentlichungstag und Bekanntmachung des Hinweises auf die Patenterteilung: **01.09.2010**
(21) Anmeldenummer: 08100601.7
(22) Anmeldetag: 17.01.2008
(51) Int. Cl.: B60J 10/00

(54) **Verfahren zur Herstellung einer Dichtung, insbesondere für ein Kraftfahrzeug, und eine solche Dichtung**
Method for producing a seal, in particular for a motor vehicle, and such a seal
Procédé destiné à la fabrication d'un joint, en particulier pour un véhicule automobile, et un tel joint

(30) Priorität: 19.01.2007 DE 102007002946
(43) Veröffentlichungstag der Anmeldung: 23.07.2008
(73) Patentinhaber: METZELER Automotive Profile Systems GmbH, 88131 Lindau (DE)
(72) Erfinder: Fellner, Johannes Metzeler Autom.Profile Systems GmbH, Wasserburg 88142 (DE); Seidel, Ulrich Metzeler Autom.Profile Systems GmbH, Niederstaufen 88138 (DE); Kapler, Kai Uwe Metzeler Autom.Profil Systems GmbH, Berg 88276 (DE); Müller, Stephan Metzeler Automot.Profile Systems GmbH, Kressbronn 88079 (DE); Dunstheiner, Reiner Metzeler Autom.Profile Systems GmbH, Lindau 88131 (DE)
(74) Vertreter: Schober, Christoph D.

(56) Entgegenhaltungen:
- EP-A- 1 132 242
- DE-A1- 19 531 167
- US-A- 4 308 302
- US-A- 4 740 336
- US-A- 5 013 379
- US-A- 5 411 785
- US-A- 5 636 895
- US-A1- 2005 123 718
- US-B2- 6 948 719

## Beschreibung

Die vorliegende Erfindung betrifft ein Verfahren zur Herstellung einer sich in einer Längsrichtung erstreckenden Dichtung, insbesondere für ein Kraftfahrzeug, wobei die Dichtung einen Befestigungsabschnitt und einen Dichtungsabschnitt umfasst. Der Befestigungsabschnitt ist an einem starren Bauteil festlegbar. Ferner ist eine Dichtmasse zur Abdichtung eines Bereiches zwischen dem starren Bauteil und dem Befestigungsabschnitt vorgesehen. Die Erfindung betrifft ferner eine solche Dichtung.

Eine derartige Dichtung kommt bei Kraftfahrzeugen zur Abdichtung im Bereich von Karosserieöffnungen zum Einsatz. Zur Befestigung der Dichtung ist ein Befestigungsabschnitt vorgesehen, der üblicherweise im Querschnitt U-förmig ausgebildet ist und einen Aufnahmekanal bereitstellt, so dass der Befestigungsabschnitt auf einen Karosserieflansch als starres Bauteil aufsteckbar ist. Ein mit dem Befestigungsabschnitt verbundener, elastisch verformbarer Dichtungsabschnitt liegt beispielsweise im Falle eines beweglich an der Karosserie-öffnung angeschlossenen Bauteils in dessen geschlossener Stellung an dem beweglichen Bauteil an. Eine solchermaßen ausgebildete Dichtung gewährleistet beispielsweise die Abdichtung einer Fahrzeugtür oder einer Heckklappe.

Um das Eindringen von Feuchtigkeit beziehungsweise Wasser über den Aufnahmekanal in einen dem Fahrzeuginneren zugewandten Bereich zwischen Karosserieflansch und dem Befestigungsabschnitt zu vermeiden, ist es beispielsweise aus der DE 195 31 167 A1 bekannt nach der Extrusion der Dichtungsstranges eine klebrige Dichtmasse, wie beispielsweise Butyl, in einen Bereich zwischen Karosserieflansch und Befestigungsabschnitt in den Aufnahmekanal einzubringen. Nach Aufstecken des Befestigungsabschnittes auf den Karosserierahmen ist das freie Ende des Rahmens fest mit der Dichtmasse verklebt. Die Dichtmasse trägt also zur Befestigung des Befestigungsabschnittes an dem Rahmen bei.

Nachteilig hierbei ist, dass die Dichtmasse nach dem Einbringen in den Aufnahmekanal zähflüssig beziehungsweise klebrig ist. Infolgedessen ergeben sich beim anschließenden Ablängen des Dichtungsstranges Probleme aufgrund dieser Klebrigkeit, es ergibt sich zwangsläufig ein unsauberer Schnitt. Folglich ist ein erhöhter Reinigungsaufwand notwendig. Ferner kommt es beim späteren Verbinden der Enden des Dichtungsstranges zu einem erhöhten Arbeitsaufwand infolge der ungleichmäßigen Ausbildung der Enden. Ähnliche Probleme ergeben sich auch im Rahmen etwaiger Reparaturen, bei welchen der Dichtungsstrang von dem Karosserieflansch abgezogen werden muss. Da der Karosserieflansch mit der Butylmasse verklebt ist, wird zum einen ein erhöhter Kraftaufwand erforderlich, um die Dichtung überhaupt abziehen zu können. Zum anderen bleibt nach dem Abziehen ein Teil der Butylmasse an der Flanschaußenfläche kleben. Folglich kann die Dichtung nicht ohne weiteres auf den Flansch aufgesteckt werden. Vorab müssen nämlich die an dem Flansch verbliebenen Reste des Dichtmassenmaterials entfernt werden.

Ferner ist es aus der DE 10 2004 050 777 A1 bekannt, Schaumstoffmaterial auf Polyurethan-Basis sowohl zum Zwecke der Abdichtung als auch zur Abstützung eines Dichtungsabschnittes gegenüber einem Karosserieblech einzusetzen. Zur Herstellung wird zunächst die einen Befestigungsabschnitt und einen Dichtungsabschnitt umfassende Dichtung als Strangpressprofil extrudiert und in der gewünschten Länge abgelängt. Anschließend wird das Profil in ein zwei Formhälften umfassendes Formwerkzeug zur Vulkanisation eingelegt. Das Formwerkzeug weist neben einem Bereich zur Aufnahme des Profils einen weiteren Formraum auf, in welchem eine Dichtmasse einbringbar ist. So kann während der Vulkanisation des Profils ein Reaktionsgemisch aus Polyurethan-Basis als Dichtmasse in den weiteren Formraum eingespritzt und auf diese Weise an das Profil angeformt werden.

Es hat sich als nachteilig erwiesen, dass ein vergleichsweise hoher Materialaufwand erforderlich ist, um den Freiraum zwischen Blech und Dichtungsabschnitt mit dem Schaumstoffmaterial auszufüllen, so dass neben der Dichtwirkung auch eine Abstützwirkung durch das Schaumstoffmaterial erzielt werden kann. Ferner eignet sich das Herstellverfahren aufgrund der Herstellung mittels eines Formwerkzeuges nicht für lange Dichtungsstränge. Zudem erfordert auch hier eine etwaige spätere Demontage des Dichtungsprofils einen erhöhten Arbeitsaufwand.

Die US 5,636,895 offenbart eine Dichtung, die einen Befestigungsabschnitt und einen Dichtungsabschnitt aufweist. Der Befestigungsabschnitt ist U-förmig ausgebildet und mit einem Verstärkungsträger armiert. In den Aufnahmekanal des Befestigungsabschnitts ragen mehrere Dichtlippen hinein. Der Dichtungsabschnitt und der Befestigungsabschnitt sind koextrudiert. In dem Befestigungsabschnitt ist ferner ein Dichtstrang eingebracht, der sowohl eine stoffschlüssige Verbindung mit dem Befestigungsabschnitt als auch mit einem in den Aufnahmekanal eingebrachten starren Bauteil eingeht.

Die Dichtleiste wird in den Befestigungsabschnitt der Dichtung eingebracht, indem eine Dichtmasse erwärmt und mit einem inaktiven Gas wie Karbondioxid oder Stickstoff versetzt, und in den Befestigungsabschnitt eingespritzt wird. Das Gas schäumt die Dichtmasse im Befestigungsabschnitt auf und erzeugt schließlich den klebrigen Dichtstreifen. Anschließend wird die Dichtung mit Hilfe des Befestigungsabschnitts auf einen von einem Fahrzeug ausgebildeten Flansch aufgesetzt, wobei die klebrige Dichtleiste eine stoffschlüssige Verbindung mit dem Flansch eingeht.

Die US 6,948,719 B2 offenbart ein Dichtungsprofil aus einem Elastomer oder Plastomer mit einem Dichtungsabschnitt und einem Befestigungsabschnitt. Der Befestigungsabschnitt umfasst einen ersten Schenkel und einen zweiten Schenkel. Zwischen den Schenkeln ist eine Öffnung vorgesehen, in die ein Keil derart eingebracht wird, dass sich die Flügel der Schenkel annähern. Hierdurch kann ein in den Befestigungsabschnitt eingebrachtes Bauteil kraftschlüssig festgelegt werden. Des Weiteren weist der Befestigungsabschnitt mehrere Dichtlippen auf. In einer weiteren Ausführungsform dienen die Dichtlippen als Vorsprung, um einen elastischen Kitt der gegen eine Schicht aus nicht dehnbarem Material gedrückt ist, abzustützen.

Der Erfindung liegt der Aufgabe zugrunde, ein Verfahren zur Herstellung einer Dichtung zu schaffen, mit dem sich eine einfach herstellbare, leicht montierbare und insbesondere mehrfach montier- und demontierbare Dichtung erzielen lässt, bei der auch der Bereich zwischen Befestigungsabschnitt und starrem Bauteil abgedichtet ist. Zudem soll eine solche Dichtung angegeben werden.

Zur Lösung dieser Aufgabe ist ein Verfahren zur Herstellung einer sich in einer Längsrichtung erstreckenden Dichtung, insbesondere für ein Kraftfahrzeug, vorgesehen, wobei die Dichtung die eingangs genannten Merkmale und das Verfahren die folgenden Schritte umfasst:
a) Extrudieren der Dichtung (10);
b) Aufbringen eines Schaumstoffmaterials auf Polyurethan-Basis als Dichtmasse (40) auf den Befestigungsabschnitt (30), so dass die Dichtmasse (40) stoffschlüssig oder formschlüssig mit dem Befestigungsabschnitt (30) verbunden ist;
c) Aushärten der Dichtmasse (40) zumindest in einem solchen Maß, dass die Dichtmasse (40) frei von einer stoffschlüssigen Verbindung mit dem starren Bauteil (50) dichtend an dem starren Bauteil (50) anlegbar ist; wobei das Schaumstoffmaterial zum Aushärten bei einer Temperatur von etwa 50 °C bis etwa 150 °C wärmebehandelt wird und
d) wobei die Verfahrensschritte a) bis c) nacheinander und jeweils in einem kontinuierlichen Durchlaufprozess entlang der Längsrichtung ausgeführt werden.

Das erfindungsgemäße Verfahren beruht auf der Erkenntnis, nach der Extrusion der Dichtung ein Schaumstoffmaterial auf Polyurethan-Basis als Dichtmasse auf dem Befestigungsabschnitt und zur Abdichtung des Bereiches zwischen dem starren Bauteil und dem Befestigungsabschnitt aufzubringen. Anschließend erfolgt eine Aushärtung des Schaumstoffmaterials, wobei der Grad der Aushärtung zumindest so hoch sein sollte, dass der Befestigungsabschnitt beziehungsweise die Dichtmasse nicht an dem starren Bauteil festklebt. Der Schaumstoff weist bevorzugt eine im Wesentlichen geschlossenzellige Struktur auf und ist im Vergleich zu herkömmlichem Dichtmaterial, wie beispielsweise Butyl, zumindest weitaus weniger klebrig. Durch das Aushärten des Schaumstoffmaterials fehlt diesem die Klebrigkeit zumindest in einem solchen Maß, dass bei einem eventuellen Abziehen der Dichtung von dem starren Bauteil keine Reste der Dichtmasse an dem starren Bauteil verbleiben. Vorzugsweise ist das Schaumstoffmaterial nach der Aushärtung vollständig nicht klebrig. Auf diese Weise kann die in Form eines Dichtungsstranges hergestellte Dichtung auch auf einfache Weise abgelängt werden, ohne dass es zu eingangs erwähnten Verunreinigungen und Problemen bei der weiteren Handhabung kommt.

Zur Herstellung des Schaumstoffes an sich wird bevorzugt mechanisches Schäumen eingesetzt, wobei die Dichtmasse mit Gas, insbesondere Druckluft, als Treibmittel gemischt wird. Hierfür eignet sich insbesondere ein Einkomponenten-Polyurethan-Schaumstoff. Bereits durch die Druckdifferenz beim Aufbringen des Gemisches auf den Befestigungsabschnitt bildet sich der Schaumstoff aus. Zudem findet bereits beim Austritt aus der Aufbringeinheit durch die Umgebungsbedingungen, wie beispielsweise die Raumtemperatur oder die Luftfeuchtigkeit, eine teilweise Härtung des Schaumstoffmaterials statt.

Mit dem erfindungsgemäßen Verfahren wird auch eine Verschmutzung der Werkzeuge zur weiteren Bearbeitung der Dichtung, wie beispielsweise für das Ablängen des Dichtungsstranges, vermieden. Ferner kann das Dichtungsprofil mehrfach auf einen Karosserieflansch aufgesteckt und abgezogen werden, ohne dass es zu einer Verschmutzung des Flansches kommt und ohne dass die Dichtmasse in ihrer Dichtfunktion eingeschränkt wird. Zudem erlaubt die Verwendung des Polyurethan-Schaumstoffmaterials eine Reduzierung des Gewichts der Dichtung. Mit der gezielten Aushärtung des Schaumstoffmaterials wird eine weitere Reduzierung der Dauer des Herstellungsverfahrens erreicht.

Die einzelnen Verfahrenschritte können nacheinander als kontinuierliche Durchlaufprozesse durchgeführt werden, so dass somit das gesamte Verfahren als Durchlaufverfahren durchgeführt werden kann.

Vorteilhafte Ausgestaltungen des erfindungsgemäßen Verfahrens sind in den Ansprüchen 2 bis 6 beschrieben.

Um eine Beschleunigung des Verfahrens zu erreichen, kann das Schaumstoffmaterial zum Aushärten wärmebehandelt werden. Vorteilhafterweise erfolgt die Wärmebehandlung des Schaumstoffmaterials mittels Mikrowellen. In diesem Zusammenhang erweist es sich ferner als vorteilhaft, wenn das Schaumstoffmaterial bei einer Temperatur von etwa 80 °C bis etwa 120 °C, wärmebehandelt wird. Infolge der Verwendung von Mikrowellen zur Wärmebehandlung wird lediglich das Schaumstoffmaterial angeregt und ausgehärtet, wohingegen die übrigen Komponenten der Dichtung nahezu unberührt bleiben. Auf diese Weise werden die Werkstoffeigenschaften des Schaumstoffmaterials verbessert. So kann beispielsweise die Klebrigkeit der Dichtmasse reduziert werden, um ein Anhaften des starren Bauteils an der Dichtmasse zu vermeiden. Gleichzeitig werden die Werkstoffeigenschaften und Form der übrigen Bestandteile der Dichtung nicht beeinträchtigt. Mit anderen Worten werden der Dichtungs- und der Befestigungsabschnitt nicht verformt, sondern behalten ihre durch den Extrusionsprozess geschaffene gewünschte Form. Alternativ kann das Schaumstoffmaterial auch mittels UV-Licht ausgehärtet werden.

In Weiterbildung des erfindungsgemäßen Verfahrens wird vorgeschlagen, dass das Schaumstoffmaterial ein Einkomponenten-Polyurethan-Schaumstoff ist. Auf diese Weise müssen nicht mehrere Basisstoffe zur Herstellung des Schaumstoffes vorgehalten werden. Zudem lässt sich ein solches Einkomponenten-Material durch mechanisches Schäumen mit vergleichsweise geringem Aufwand aufschäumen. Alternativ kann auch ein Zweikomponenten- oder ein Mehrkomponenten-Polyurethan-Schaumstoff verwendet werden.

Vorteilhafterweise werden im Schritt a) der Dichtungs- und der Befestigungsabschnitt koextrudiert. Dies führt zu einer weiteren Vereinfachung der Herstellung und der Schritt des Aufbringens des Schaumstoffmaterials kann direkt nachgeschaltet werden. Insgesamt können alle Verfahrensschritte als Durchlaufprozess ausgeführt werden.

Überdies wird mit dem zuvor beschriebenen Verfahren eine Dichtung hergestellt, die insbesondere zur Abdichtung der Karosserie eines Kraftfahrzeuges Anwendung findet. Die durch Extrusion gefertigte Dichtung umfasst einen Befestigungsabschnitt und einen Dichtungsabschnitt, wobei der Befestigungsabschnitt einen Aufnahmekanal zur Aufnahme eines starren Bauteils aufweist. Der Befestigungsabschnitt ist mit wenigstens einer in den Aufnahmekanal hineinragenden Haltelippe zur Festlegung des Befestigungsabschnittes an dem starren Bauteil versehen.

Eine Dichtmasse aus einem Schaumstoffmaterial auf Polyurethan-Basis ist zur Abdichtung eines Bereiches zwischen dem starren Bauteil und dem Befestigungsabschnitt stoffschlüssig oder formschlüssig mit dem Befestigungsabschnitt verbunden. Zudem weist der Befestigungsabschnitt wenigstens einen ersten in den Aufnahmekanal hineinragenden Vorsprung zur Halterung der Dichtmasse an dem Befestigungsabschnitt und zur Positionierung des Befestigungsabschnitts an dem starren Bauteil auf.

Der in den Aufnahmekanal hineinragende Vorsprung dient zum einen als Zentriemocken, um das Aufstecken des Befestigungsabschnittes auf das starre Bauteil zu erleichtern und eine mittige Anordnung des Befestigungsabschnittes auf dem starren Bauteil zu erreichen. Zum anderen ermöglicht der Vorsprung wenigstens teilweise einen Halt der Dichtmasse an dem Befestigungsabschnitt, vorzugsweise an der Basis des Befestigungsabschnittes. Ferner kann der Vorsprung auch zur Positionierung der Aufbringeinheit für das Schaumstoffmaterial, insbesondere entlang der Längsrichtung des Dichtungsstranges, und zur Formgebung des Dichtmassenmaterials herangezogen werden. Die Dichtmasse kann mit dem wenigstens einen Vorsprung stoffschlüssig und/oder formschlüssig verbunden sein. Der Vorsprung kann bei einer eventuellen späteren Demontage der Dichtung von dem starren Bauteil ein Abziehen des Dichtmassenstranges von dem Befestigungsabschnitt verhindern.

Das Schaumstoffmaterial auf Polyurethan-Basis kann direkt nach der Extrusion der Dichtung auf den Befestigungsabschnitt aufgebracht werden. Zudem können einfachere Profilgeometrien für das starre Bauteil verwendet werden und die Rohbautoleranzen großzügiger gestaltet werden. All dies führt zu weiteren Zeit- und Kostenersparnissen.

Sowohl der erste Befestigungsschenkel als auch der zweite Befestigungsschenkel sind jeweils mit einem Vorsprung versehen. Die beiden Vorsprünge bilden zweckmäßigerweise einen freien Spalt, durch den das starre Bauteil in die endgültige Lage innerhalb des Aufnahmekanals geführt werden kann. Dabei ist es von Vorteil, wenn wenigstens ein Vorsprung eine schräge Führungsfläche aufweist, um das Einfädeln zu erleichtern.

Die mit dem erfindungsgemäßen Verfahren geschaffene Dichtung kann mehrfach auf das starre Bauteil, insbesondere einen Karosserieflansch, aufgesteckt und abgezogen werden, ohne dass es zu einer Verschmutzung des starren Bauteils kommt und ohne dass die Dichtmasse in ihrer Funktion eingeschränkt wird. Zudem wird ein Gewichtersparnis erzielt.

Der Befestigungsabschnitt weist zur Ausbildung des Aufnahmekanals einen ersten Befestigungsschenkel, einen zweiten Befestigungsschenkel und eine den ersten Befestigungsschenkel und den zweiten Befestigungsschenkel miteinander verbindende Basis auf. Die Dichtmasse ist mit der Basis und/oder wenigstens einem Befestigungsschenkel verbunden. So kann die Dichtmasse beispielsweise in den durch die Basis und wenigstens teilweise durch die Befestigungsschenkel gebildeten Grund des Aufnahmekanals eingebracht werden. Der zugehörige Verfahrensschritt des Dichtmasseneintrages wird dabei in kontinuierlicher Weise ausgeführt, wobei eine vorbestimmte Menge an Dichtmasse entlang der Längsrichtung des Dichtungsstranges in den Bereich des Grunds des Aufnahmekanals eingeschäumt wird.

Der Befestigungsabschnitt weist einen zweiten in den Aufnahmekanal hineinragenden Vorsprung auf, wobei der erste Vorsprung und der zweite Vorsprung derart angeordnet und ausgeformt sind, dass ein freier Spalt zwischen den Vorsprüngen zur Positionierung des starren Bauteils gebildet ist. Das freie Ende des Vorsprungs weist eine schräge Führungsfläche zur geeigneten Positionierung des Befestigungsabschnittes auf dem starren Bauteil auf.

Der erste Vorsprung ist an dem ersten Befestigungsschenkel und der zweite Vorsprung an dem zweiten Befestigungsschenkel sowie im Wesentlichen gegenüberliegend zu dem ersten Vorsprung angeordnet. Infolge der Anordnung der Vorsprünge an den Befestigungsschenkeln kann das Schaumstoffmaterial beispielsweise auch derart in den Bereich des Grundes des Aufnahmekanals eingebracht werden, so dass lediglich eine formschlüssige Halterung der Dichtmasse an dem Befestigungsabschnitt erzielt wird. Nach dem Aufstecken des Dichtungsstranges auf das starre Bauteil drückt dessen Stirnseite die Dichtfläche weitgehend elastisch ein und die Dichtmasse wird an die Basis des Befestigungsabschnittes angedrückt. Falls der Dichtungsstrang demontiert werden sollte, verhindern die Vorsprünge, dass die nach Entfernen des Dichtungsstranges von dem Flansch lediglich formschlüssig gehaltene Dichtmasse aus dem Aufnahmekanal gezogen wird. Die Dichtmasse muss also beim erneuten Aufstecken des Dichtungsstranges auf den Flansch nicht erneuert werden. Auch wenn eine Erneuerung des Dichtmassenstranges nötig sein sollte, ist dieser aufgrund der lediglich formschlüssigen Halterung auf einfache Weise entfernbar und ein neuer Dichtmassenstrang mittels eines Durchlaufprozess auf den Befestigungsabschnitt aufbringbar.

Alternativ ist die Dichtmasse mit wenigstens einem der Vorsprünge stoffschlüssig verbunden. Dies eignet sich beispielsweise für den Fall, dass ein oder zwei Vorsprünge an der Basis angeordnet sind und weitgehend parallel zu den Befestigungsschenkeln in den Aufnahmekanal ragen.

Das Schaumstoffmaterial ist ein Einkomponenten-Polyurethan-Schaumstoff oder ein Zweikomponenten-Polyurethan-Schaumstoff.

Um eine ausreichende kraftschlüssige Verbindung des Befestigungsabschnittes mit dem starren Bauteil, insbesondere mit einem Karosserieflansch, zu ermöglichen sind der erste Befestigungsschenkel und/oder der zweite Befestigungsschenkel mit mehreren in den Aufnahmekanal hineinragen Haltelippen versehen. Im Hinblick auf die Befestigung an dem starren Bauteil ist der Befestigungsabschnitt durch einen Verstärkungsträger armiert. Dieser vorzugsweise metallische Verstärkungsträger erhöht die Steifigkeit des Befestigungsabschnittes.

Der Dichtungsabschnitt und/oder der Befestigungsabschnitt sind aus einem elastomeren Werkstoff, vorzugsweise aus einem thermoplastischen Elastomer oder Ethylen-Propylen-Dien-Kautschuk extrudiert.

Der Befestigungsabschnitt ist durch Koextrusion mit dem Dichtungsabschnitt verbunden. In Hinblick auf die Dichtfunktion der Dichtung ist der Dichtungsabschnitt mit wenigstens einer Hohlkammer und/oder wenigstens einer Dichtlippe versehen.

Die Dichtmasse liegt frei von einer stoffschlüssigen Verbindung mit dem starren Bauteil dichtend an dem starren Bauteil an. Das starre Bauteil wird durch einen Flansch gebildet. Der Flansch liegt mit seiner im Vergleich zu dessen Seitenflächen schmalen Stirnseite dichtend, aber nicht klebend an der Dichtfläche der Dichtmasse an und drückt diese leicht ein. Die Dichtmasse kann stoffschlüssig und/oder formschlüssig mit dem Befestigungsabschnitt verbunden sein.

Nachfolgend wird die Erfindung unter Bezugnahme auf die Zeichnungen weiter erläutert. Dabei zeigen schematisch:
- Fig. 1: einen Querschnitt durch eine erste Dichtung zum Abdichten einer Karosserie eines Kraftfahrzeuges vor dem Aufstecken auf einen Rahmen der Karosserie;
- Fig. 2: den Querschnitt gemäß Fig. 1 nach dem Aufstecken auf den Karos- serierahmen;
- Fig. 3: einen Querschnitt durch eine zweite Dichtung zum Abdichten einer Karosserie eines Kraftfahrzeuges vor der Befestigung an einem Ka- rosserierahmen;
- Fig. 4: den Querschnitt gemäß Fig. 3 nach der Befestigung an dem Karosse- rierahmen;
- Fig. 5: einen Querschnitt durch eine dritte Dichtung zum Abdichten einer Karosserie eines Kraftfahrzeuges vor der Befestigung an einem Ka- rosserierahmen, und
- Fig. 6: den Querschnitt gemäß Fig. 5 nach der Befestigung an dem Karosse- rierahmen.

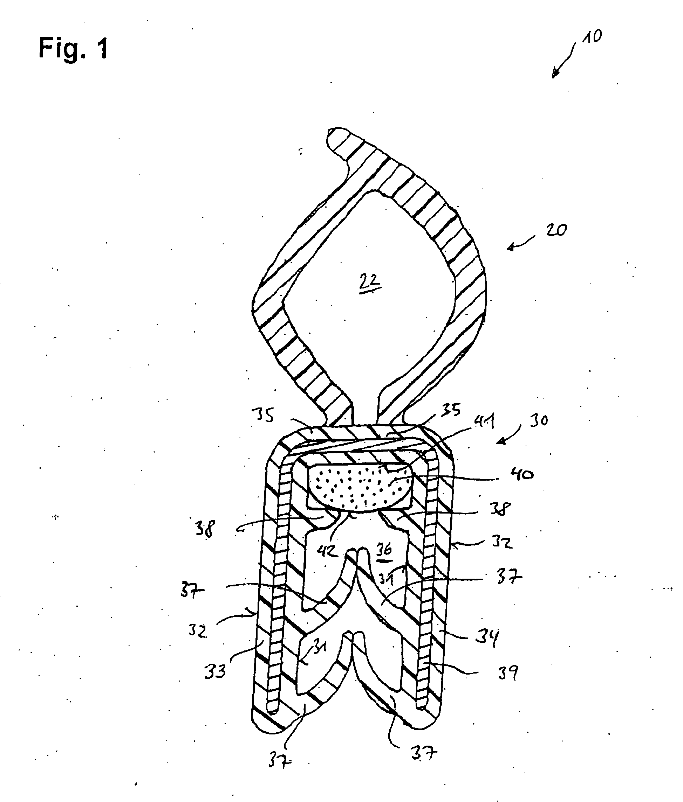

Die in den Figuren 1 bis 6 dargestellten Dichtungen 10 finden beispielsweise zum Abdichten eines beweglichen Bauteils gegenüber der Karosserie eines Kraftfahrzeuges Anwendung und erstrecken sich entlang eines Bereiches der Karosserie, an dem das bewegliche Bauteil im geschlossenem Zustand anliegt. Bei dem beweglichen Bauteil kann es sich um eine Kraftfahrzeugtür oder eine Heckklappe handeln.

Sämtliche in den Figuren 1 bis 6 gezeigten Dichtungen 10 weisen zu diesem Zweck einen Dichtungsabschnitt 20 auf, der aus einem elastisch verformbaren Werkstoff, wie beispielsweise EPDM, extrudiert ist. Der Dichtungsabschnitt 20 umfasst in allen Fällen eine Hohlkammer 22, die eine hohe Verformungsfähigkeit des Dichtungsabschnittes 20 und damit eine zuverlässige Dichtwirkung sicherstellt. Weiterhin umfassen die Dichtungen 10 jeweils einen durch Koextrusion erzeugten Befestigungsabschnitt 30 zur Festlegung der Dichtungen 10 an der Karosserie.

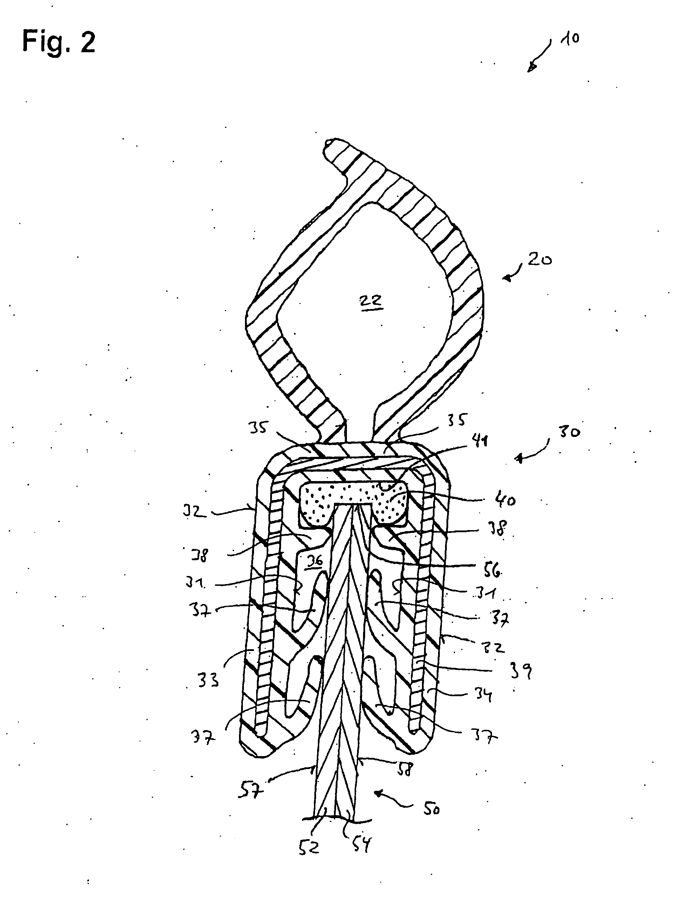

Gemäß den Figuren 1 und 2 ist der Befestigungsabschnitt 30 im Querschnitt im Wesentlichen U-förmig und weist entlang dessen Umfangsfläche eine Innenseite 31 und eine Außenseite 32 auf. Der Befestigungsabschnitt 30 umfasst einen ersten Befestigungsschenkel 33, einen zweiten Befestigungsschenkel 34 und eine den ersten Befestigungsschenkel 33 und den zweiten Befestigungsschenkel 34 miteinander verbindende Basis 35 auf. Die beiden Befestigungsschenkel 33, 34 sind derart zueinander angeordnet, dass sie einen Aufnahmekanal 36 zur Aufnahme eines starren Bauteils in Form eines Rahmens 50 der Karosserie bilden. Im vorliegenden Fall weist der Rahmen 50 zwei Flansche 52, 54 auf.

Um die Steifigkeit des Befestigungsabschnittes 30 zu erhöhen, ist ein Verstärkungsträger 39 in den Befestigungsabschnitt 30 eingebettet, der sich im Wesentlichen parallel zur Außenseite 32 erstreckt. Der Verstärkungsträger 39 kann mit Durchbrechungen versehen sein, um eine gewisse Verformung des Verstärkungsträgers 39 zu ermöglichen.

Ferner weisen sowohl der erste Befestigungsschenkel 33 als auch der zweite Befestigungsschenkel 34 an der Innenseite 31 jeweils zwei Haltelippen 37 auf, die in den Aufnahmekanal 36 hineinragen und zur kraftschlüssigen Befestigung des Befestigungsabschnittes 30 an dem Rahmen 50 dienen. Zur Befestigung der Dichtung 10 an dem Rahmen 50, dass heisst an den zwei nebeneinander liegenden Flanschen 52, 54, wird die Dichtung 10 mit dem Befestigungsabschnitt 30 derart auf den Rahmen 50 aufgesteckt, dass der Befestigungsabschnitt 30 an den beiden Flanschen 52, 54 festgelegt ist. Um das Aufstecken zu ermöglichen, sind die Haltelippen 37 in einem gewissen Maß flexibel, üben jedoch im aufgesteckten Zustand eine ausreichende Kraft zur dauerhaften Befestigung der Dichtung 10 an den Rahmen 50 aus.

Innerhalb des Aufnahmekanals 36 ist im Bereich der Basis 35 eine Dichtmasse 40 an der Innenseite 31 des Befestigungsabschnittes 30 aufgebracht. Die Dichtmasse 40 besteht aus einem Polyurethan-Schaumstoff und ist mit der Basis 35 sowie abschnittsweise mit den Befestigungsschenkeln 33, 34 stoffschlüssig verbunden. Dieser Verbindungsbereich der Umfangsfläche der Dichtmasse 40 mit dem Befestigungsbereich 30 wird als Kontaktfläche 41 bezeichnet. Der in den Aufnahmekanal 36 gerichtete, verbleibende Abschnitt der Umfangsfläche der Dichtmasse 40 wird als Dichtfläche 42 bezeichnet.

In der Nähe der Anschlussbereiche der Befestigungsschenkel 33, 34 zur Basis 35 befindet sich an der Innenseite 31 des ersten Befestigungsschenkels 33 und des zweiten Befestigungsschenkels 34 jeweils ein Vorsprung 38. Die beiden Vorsprünge 38 sind in etwa auf gleicher Höhe gegenüberliegend und in den Aufnahmekanal 36 hineinragend angeordnet und dienen zum einen als Zentriernocken, um das Aufstecken des Befestigungsabschnittes 30 auf den Rahmen 50 zu erleichtern und eine mittige Anordnung des Befestigungsabschnittes 30 auf dem Rahmen 50 zu erreichen. Für diesen Zweck weisen die Vorsprünge 38 eine schräge Führungsfläche auf. Zum anderen ermöglichen die Vorsprünge 38 wenigstens teilweise einen Halt der Dichtmasse 40 an der Basis 35. Ferner können die Vorsprünge 38 auch zur Formgebung des Dichtmassenbereiches 40 herangezogen werden.

Beim Montagevorgang der Dichtung 10 wird der Befestigungsabschnitt 30 soweit auf den Rahmen 50 aufgeschoben bis eine Stirnfläche 56 des Rahmens 50 mit der Dichtfläche 42 der Dichtmasse 40 in Kontakt kommt und die Dichtfläche 42 in Richtung der Basis 35 weitgehend elastisch eindrückt. Es kommt allerdings nicht zu einer Verklebung von Dichtmasse 40 und Rahmen 50. Durch das teilweise Eindrücken des Rahmens 50 in die Dichtmasse 40 wird die gewünschte Dichtfunktion erreicht. Die beim Eindrücken auftretende Verformung der Dichtmasse 40 wird durch die Vorsprünge 38 wenigstens teilweise gesteuert. Insbesondere verhindern die Vorsprünge 38 ein zu starkes seitliches Ausweichen der Dichtmasse 40. Mit anderen Worten kann die Dichtmasse 40 zumindest geringfügig zu einer formschlüssigen Halterung des Endes des Rahmens 50 an dem Befestigungsabschnitt 30 beitragen. Diese Halterungsfunktion steht auch in Wechselwirkung mit den Vorsprüngen 38.

In dem nach dem Aufsteckvorgang erreichten Endzustand (siehe Fig. 2) wird ein Eindringen von Feuchtigkeit oder Wasser (auch als Kriechwasser bezeichnet) von der Außenseite des Kraftfahrzeuges zur Innenseite des Kraftfahrzeuges durch die zwischen dem Rahmen 50 und dem Befestigungsabschnitt 30 eingebrachte Dichtmasse 40 verhindert.

Das Schaumstoffmaterial ist vorzugsweise ein Einkomponenten-Polyurethan-Schaumstoff, alternativ aber auch ein Mehrkomponentenschaumstoff, beispielsweise ein Zweikomponentenschaumstoff. Ein solches eine geschlossenzellige Struktur aufweisendes Schaumstoffmaterial stellt sowohl eine ausreichende Dichtwirkung als auch eine elastische Verformungsfähigkeit zur Verfügung. Die Verformungsfähigkeit ermöglicht ein zumindest teilweises Andrücken des Rahmens 50 an die Dichtmasse 40, ohne dass der Rahmen 50 mit der Dichtmasse 40 verklebt, insbesondere ohne dass die Stirnfläche 56 an der Dichtfläche 42 anklebt. Somit kann die Dichtung 10 mehrfach auf den Rahmen 50 aufgesteckt und abgezogen werden, insbesondere ohne dass der Rahmen 50 beim Abziehen mit der Dichtmasse 40 verschmutzt und infolgedessen gereinigt werden muss.

Auf Grundlage der Dichtung 10 gemäß den Figuren 1 und 2 soll im Folgenden das Verfahren zur Herstellung dieser Dichtung 10 ebenfalls an Hand der Figuren 1 und 2 erläutert werden. In einem ersten Schritt wird die Dichtung 10 extrudiert, wobei der Befestigungsabschnitt 30 und Dichtungsabschnitt 10 koextrudiert werden und in den Befestigungsabschnitt 30 ein Verstärkungsträger 39 eingebettet wird.

Im zweiten Schritt wird das Polyurethan-Schaumstoffmaterial als Dichtmasse 40 im Bereich der Basis 35 des Aufnahmekanals 36 auf die Innenseite 31 des Befestigungsabschnittes 30 aufgebracht. Hierzu wird zunächst der zur Herstellung des Schaumstoffmaterials verwendete Basiskunststoff mittels Druckluft als Treibmittel aufgeschäumt. Anschließend wird eine vorbestimmte Menge an Schaumstoffmaterial vollautomatisiert aufgebracht, wobei vorzugsweise eine solche Menge an Schaumstoffmaterial eingebracht wird, dass der Schaumstoffeintrag ausgehend von der Basis 35 bis in etwa auf Höhe der beiden Vorsprünge 38 reicht. Der frisch aufgebrachte Schaumstoff verklebt mit seiner Kontaktfläche 41 mit der Basis 35 und abschnittsweise mit den Befestigungsschenkeln 33, 34.

Im nächstfolgenden Schritt erfolgt die Aushärtung des Schaumstoffmaterials durch eine Wärmebehandlung mittels Mikrowellen. Dazu wird die in Form eines Dichtungsstranges ausgebildete Dichtung 10 kontinuierlich durch einen Mikrowellenofen geführt, in dem eine Temperatur in einem Bereich von etwa 80 °C bis etwa 120 °C herrscht. Die Mikrowellen aktivieren das Schaumstoffmaterial der Dichtmasse 40, haben aber keinen oder einen vernachlässigbaren Einfluss auf die Werkstoffeigenschaften und die äußere Form der restlichen Komponenten der Dichtung 10, das heißt auf den Dichtungsabschnitt 20 und den Befestigungsabschnitt 30. Auf diese Weise kann eine schnelle und kontinuierliche Aushärtung der Dichtmasse 40 erzielt werden. Nach Durchlaufen des Mikrowellenofens kann der Dichtungsstrang schließlich in der gewünschten Länge abgelängt werden, wobei es zu keiner Verklebung oder Verschmutzung der Ablängvorrichtung beziehungsweise der Endabschnitte des Dichtungsstranges kommt.

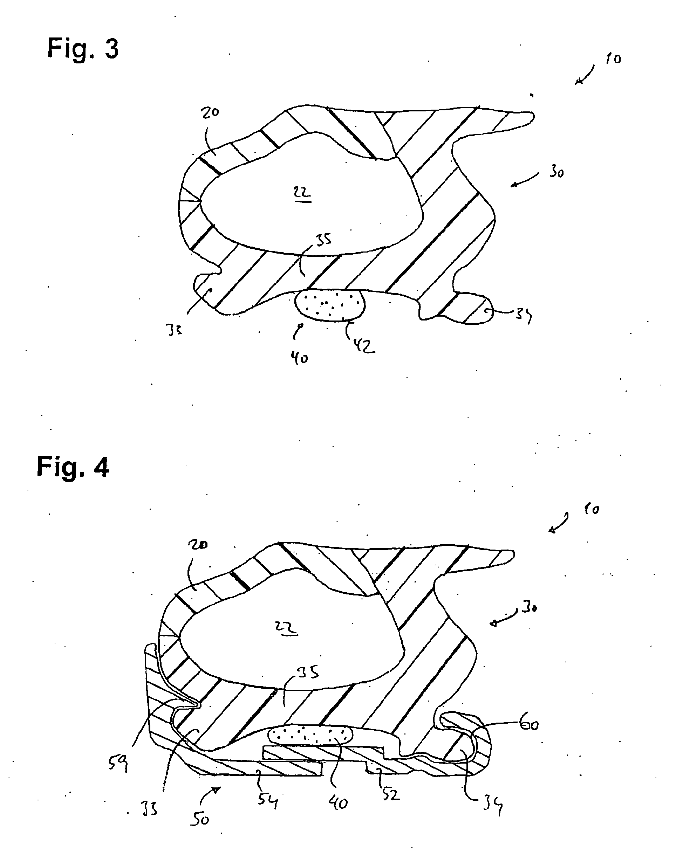

Im Folgenden soll das erfindungsgemäße Herstellungsverfahren anhand der Figuren 3 bis 6 weiter erläutert werden.

In dem Ausführungsbeispiel gemäß den Figuren 3 und 4 werden der Dichtungsabschnitt 20 und der Befestigungsabschnitt 30 zur Bildung der Hohlkammer 22 mittels Koextrusion hergestellt. Der Befestigungsabschnitt 30 umfasst zwei Befestigungsschenkel 33, 34 in Form von Vorsprüngen, wobei im montierten Zustand (siehe Fig. 4) der Befestigungsschenkel 33 eine Nase 59 des Flansches 54 und der Befestigungsschenkel 34 eine Nut 60 des Flansches 52 hintergreift. Nach Koextrusion von Dichtungsabschnitt 20 und Befestigungsabschnitt 30 wird das Schaumstoffmaterial auf Polyurethan-Basis auf die Aussenseite der Basis 35 in Form eines Dichtmassenstranges entlang der Längsrichtung des Dichtungsstranges aufgebracht. Dabei wird die Dichtmasse 40 stoffschlüssig mit dem Befestigungsabschnitt 30 verbunden. Anschließend erfolgt eine Aushärtung der Dichtmasse 40 mittels Mikrowellen in einem Durchlaufofen. Die Verweildauer in diesem Aushärteofen wird derart gewählt, dass die äußere Dichtfläche 42 ausreichend elastisch verformbar ist, ohne dass es zu einer Verklebung mit dem starren Bauteil 50, insbesondere dem Flansch 52 kommen kann.

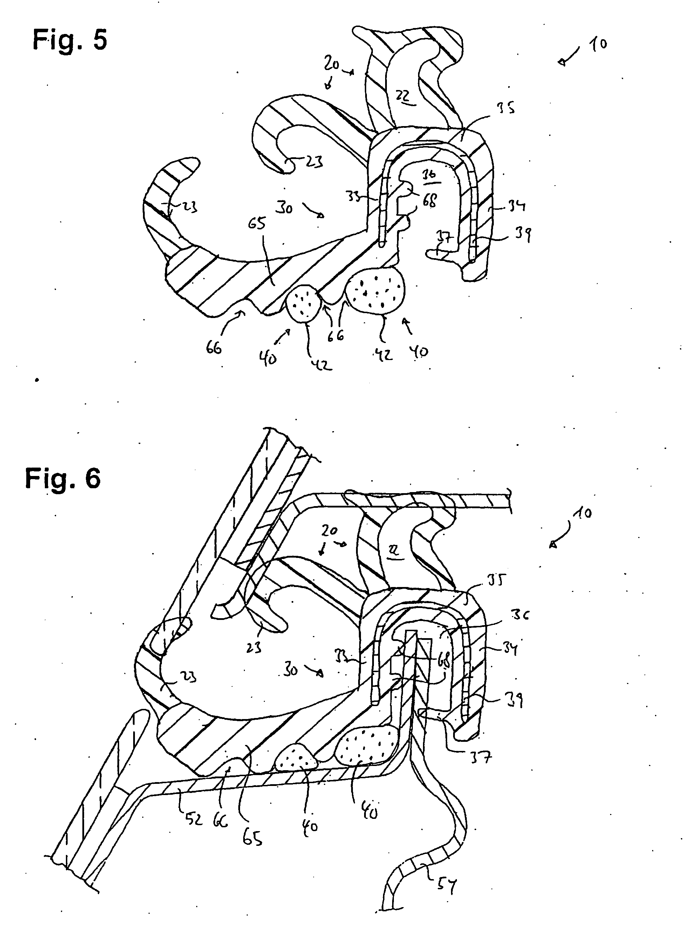

Das Ausführungsbeispiel gemäß den Figuren 5 und 6 unterscheidet sich von der Ausgestaltung gemäß den Figuren 1 und 2 insbesondere dahingehend, dass der Befestigungsabschnitt 30 einen Anlagebereich 65 umfasst, der auf der zu dem Flansch 52 gerichteten Seite mehrere Vertiefungen beziehungsweise Ausnehmungen 66 aufweist. Hierbei dienen zwei Ausnehmungen 66 jeweils zur Aufnahme einer Dichtmasse 40 in Form eines Stranges oder eines entlang der Längsrichtung begrenzten Abschnittes. Der Dichtungsabschnitt 20 umfasst neben der Hohlkammer 22 zusätzlich zwei Dichtlippen 23. Der Befestigungsschenkel 33 weist zwei Ansätze 68 in Form von Vorsprüngen auf, an denen der Flansch 52 im montierten Zustand (siehe Fig. 6) anliegt. Zudem umfasst der Befestigungsschenkel 34 eine Haltelippe 37 zur kraftschlüssigen Aufnahme der Flansche 52, 54 in dem Aufnahmekanal 36.

Nach Koextrusion von Dichtungsabschnitt 20 und Befestigungsabschnitt 30 wird das Schaumstoffmaterial auf Polyurethan-Basis als Dichtmasse 40 im Bereich zweier Ausnehmungen 66 des Anlagebereiches 65 auf den Befestigungsabschnitt 30 aufgebracht, so dass die Dichtmasse 40 stoffschlüssig mit dem Befestigungsabschnitt 30 verbunden ist. Anschließend erfolgt wiederum eine Aushärtung im Mikrowellenofen entsprechend den obigen Ausführungen.

Das vorgestellte Verfahren lässt sich vorteilhafterweise ohne weiteres in bestehende Herstellungsabläufe integrieren. So können bereits vorhandenen Extrusionsvorrichtungen auf einfache Weise eine Aufbringeinheit zum Auftragen des Schaumstoffmaterials, wie beispielsweise eine Düse, und eine Aushärteeinrichtung, wie beispielsweise ein Mikrowellenofen, nachgeschaltet werden. Auf diese Weise wird insgesamt ein kontinuierlicher Durchlaufprozess erhalten.

### Bezugszeichenliste

- 10: Dichtung

- 20: Dichtungsabschnitt
- 22: Hohlkammer
- 23: Dichtlippe

- 30: Befestigungsabschnitt
- 31: Innenseite
- 32: Außenseite
- 33: erster Befestigungsschenkel
- 34: zweiter Befestigungsschen- kel
- 35: Basis
- 36: Aufnahmekanal
- 37: Haltelippe
- 38: Vorsprung
- 39: Verstärkungsträger

- 40: Dichtmasse
- 41: Kontaktfläche
- 42: Dichtfläche

- 50: Rahmen
- 52: Flansch
- 54: Flansch
- 56: Stirnfläche
- 57: Außenseite
- 58: Außenseite
- 59: Nase
- 60: Nut

- 65: Anlagebereich
- 66: Ausnehmung
- 68: Ansatz

## Patentansprüche

1. Verfahren zur Herstellung einer sich in einer Längsrichtung erstreckenden Dichtung (10), insbesondere für ein Kraftfahrzeug,
wobei die Dichtung (10) einen Befestigungsabschnitt (30) und einen Dichtungsabschnitt (20) umfasst,
wobei der Befestigungsabschnitt (30) an einem starren Bauteil (50) festlegbar ist und
wobei eine Dichtmasse (40) zur Abdichtung eines Bereiches zwischen dem starren Bauteil (50) und dem Befestigungsabschnitt (30) vorgesehen ist und wobei das Verfahren folgende Schritte umfasst:
a) Extrudieren der Dichtung (10);
b) Aufbringen eines Schaumstoffmaterials auf Polyurethan-Basis als Dichtmasse (40) auf den Befestigungsabschnitt (30), so dass die Dichtmasse (40) stoffschlüssig oder formschlüssig mit dem Befestigungsabschnitt (30) verbunden ist;
c) Aushärten der Dichtmasse (40) zumindest in einem solchen Maß, dass die Dichtmasse (40) frei von einer stoffschlüssigen Verbindung mit dem starren Bauteil (50) dichtend an dem starren Bauteil (50) anlegbar ist;
wobei das Schaumstoffmaterial zum Aushärten bei einer Temperatur von etwa 50 °C bis etwa 150 °C wärmebehandelt wird und
d) wobei die Verfahrensschritte a) bis c) nacheinander und jeweils in einem kontinuierlichen Durchlaufprozess entlang der Längsrichtung ausgeführt werden.

2. Verfahren nach Anspruch 1, **dadurch gekennzeichnet, dass** das Schaumstoffmaterial mittels Mikrowellen wärmebehandelt wird.

3. Verfahren nach einem der Ansprüche 1 oder 2, **dadurch gekennzeichnet, dass** das Schaumstoffmaterial bei einer Temperatur von etwa 80 °C bis etwa 120 °C wärmebehandelt wird.

4. Verfahren nach Anspruch 1, **dadurch gekennzeichnet, dass** das Schaumstoffmaterial mittels UV-Licht ausgehärtet wird.

5. Verfahren nach einem der Ansprüche 1 bis 4, **dadurch gekennzeichnet, dass** als Schaumstoffmaterial ein Einkomponenten-Polyurethan-Schaumstoff oder ein Zweikomponenten-Polyurethan-Schaumstoff vorgesehen ist.

6. Verfahren nach einem der Ansprüche 1 bis 5, **dadurch gekennzeichnet, dass** im Schritt a) der Dichtungsabschnitt (20) und der Befestigungsabschnitt (30) koextrudiert werden.

## Claims

1. Method for producing a seal (10) extending in a longitudinal direction, in particular for use in a motor vehicle,
wherein the seal (10) comprises a fastening section (30) and a sealing section (20),
wherein the fastening section (30) can be affixed to a rigid constructional part (50) and
wherein a sealing compound (40) is provided for sealing an area between the rigid constructional part (50) and the fastening section (30) and wherein the method comprises the following steps:
(a) extrusion of the seal (10);
(b) application of a foam material of polyurethane basis as the sealing compound (40) to the fastening section (30) so that the sealing compound (40) is bonded with or is locked firmly to the fastening section (30);
c) hardening of the sealing compound (40) at least to such an extent that the sealing compound (40) which is not bonded to the rigid constructional part (50) can abut against the rigid constructional part (50) to form a seal;
wherein the foam material is heat treated at a temperature between approximately 50°C and 150°C in order to achieve hardening
(d) wherein the method steps (a) to (c) are performed consecutively and within one continuous process along the length of the seal (10).

2. Method according to Claim 1 **characterised in that** the foam material is heat treated by means of microwaves.

3. Method according to one of the claims 1 or 2 **characterised in that** the foam material is heat treated at a temperature of between approximately 80°C and 120°C.

4. Method according to Claim 1 **characterised in that** the foam material is hardened by means of UV light.

5. Method according to one of the claims 1 to 4 **characterised in that** a one-component polyurethane foam or a two-component polyurethane foam is used as the foam material.

6. Method according to one of the claims 1 to 5 **characterised in that** in step (a) the sealing section (20) and the fastening section (30) are coextruded.

## Revendications

1. Procédé pour la fabrication d'un joint (10) qui s'étend dans une direction longitudinale, en particulier pour un véhicule automobile,
dans lequel le joint (10) comprend un tronçon de fixation (30) et un tronçon d'étanchement (20),
dans lequel le tronçon de fixation (30) peut être immobilisé sur un composant rigide (50), et
dans lequel une masse d'étanchéité (40) est prévue pour l'étanchement d'une zone entre le composant rigide (50) et le tronçon de fixation (30), et dans lequel le procédé comprend les opérations suivantes :
a) extrusion du joint (10) ;
b) application d'un matériau en mousse à base de polyuréthane à titre de masse d'étanchéité (40) sur le tronçon de fixation (30), de sorte que la masse d'étanchéité (40) est reliée au tronçon de fixation (30) par coopération de matières ou par coopération de formes ;
d) durcissement de la masse d'étanchéité (40), au moins dans une mesure telle que la masse d'étanchéité (40) est susceptible d'être appliquée, en étant exempte d'une telle liaison à coopération de matières avec le composant rigide (50), de façon étanche contre le composant rigide (50) ;
et le matériau en mousse est traité à chaud pour le durcissement à une température d'environ 50°C jusqu'à environ 150°C, et
d) les étapes de procédé a) à c) sont exécutées les unes après les autres et respectivement dans un processus à passage continu le long de la direction longitudinale.

2. Procédé selon la revendication 1, **caractérisé en ce que** le matériau en mousse est traité à chaud au moyen de micro-ondes.

3. Procédé selon l'une des revendications 1 ou 2, **caractérisé en ce que** le matériau en mousse est traité à chaud à une température d'environ 80°C jusqu'à environ 120°C.

4. Procédé selon la revendication 1, **caractérisé en ce que** le matériau en mousse est durci au moyen de lumière ultraviolette.

5. Procédé selon l'une des revendications 1 à 4, **caractérisé en ce que** l'on prévoit à titre de matériau en mousse, une mousse polyuréthane monocomposant ou une mousse de polyuréthane à deux composants.

6. Procédé selon l'une des revendications 1 à 5, **caractérisé en ce que,** dans l'étape a), le tronçon d'étanchéité (20) et le tronçon de fixation (30) sont coextrudés.
